# EUROPÄISCHE PATENTSCHRIFT

(11) **EP 0 882 568 B1**
(45) Veröffentlichungstag und Bekanntmachung des Hinweises auf die Patenterteilung: **12.03.2003**
(21) Anmeldenummer: 98110234.6
(22) Anmeldetag: 04.06.1998
(51) Int. Cl.: B29C 67/00, B29C 33/38, G03C 9/08

(54) **Verfahren zum Herstellen von Bauteilen durch Auftragstechnik**
Process for making component parts by layerwise depositing material
Fabrication de pièces par application de matière en couches successives

(30) Priorität: 06.06.1997 DE 19723892
(43) Veröffentlichungstag der Anmeldung: 09.12.1998
(73) Patentinhaber: GENERIS GmbH, 86167 Augsburg (DE)
(72) Erfinder: GENERIS GmbH, 86167 Augsburg (DE)
(74) Vertreter: Viering, Jentschura & Partner

(56) Entgegenhaltungen:
- EP-A- 0 431 924
- WO-A-95/13565
- DE-A- 3 221 357
- US-A- 4 752 498
- US-A- 5 182 170
- US-A- 5 324 617

## Beschreibung

Die Erfindung betrifft ein Verfahren zum Herstellen von Bauteilen, insbesondere von Formen oder Kernen für den Modellbau, durch Auftragstechnik.

Ein herkömmliches Herstellungsverfahren für Formen oder Kerne für den Metallguß besteht darin, daß sogenannter Croning-Sand, ein pulverförmiges Material aus von Kunstharz umhüllten Gießsanden, wie Quarz- oder Zirkon-Sand, in Kästen abgefüllt wird, wobei eine Negativform des Gußstückes dadurch erzeugt wird, daß ein Positivmodell des zu fertigenden Bauteils in den Kasten eingesetzt und in den Croning-Sand eingebettet wird. Die gesamte formbildende Croning-Sand-Füllung des Kastens wird dann üblicherweise in einem Arbeitsgang durch Erhitzen ausgehärtet.

Die Fertigung des Positivmodells kann mit herkömmlichen Methoden des handwerklichen Modellbaus oder CAD-unterstützten Verfahren wie NC-Fräsen oder NC-Drehen erfolgen. Für die Herstellung von komplexen Formen oder Kernen für Prototypen oder auch kleinere Chargen von Metallgußteilen wird heute teilweise das Selektive-Laser-Sinter-Verfahren (SLS) beschrieben in WO 88/02677 angewendet. Bei dem SLS-Verfahren wird ein Sintermaterial, d.h. ein metallisches Partikelmaterial, in einer Schicht aufgetragen und unter Einbringen von Energie mit einem schwenkbaren Laserstrahl selektiv angeschmolzen und dadurch gebunden. Dieser Vorgang wird schichtenweise wiederholt, um ein räumliches Bauteil auszubilden. Durch den schichtenweisen Aufbau des zu erstellenden Gegenstandes ist es möglich, mit Hohlräumen und Hinterschneidungen versehene komplexe Gestaltungen herzustellen, die mit herkömmlichen Methoden nicht zu fertigen sind. Nachteil des SLS-Verfahrens ist die aufwendige Maschinerie mit Laserscantechnik und die durch die eingeschränkte Schwenkbarkeit des Lasers hervorgerufene Begrenzung der maximal zu erstellenden Bauteilgröße.

Aus der EP-0 431 924 B1 ist ein Verfahren zur schichtenweisen Erzeugung von dreidimensionalen Modellen durch Auftragstechnik mit selektiver Härtung bekannt. Bei diesem Verfahren wird eine Schicht von Partikelmaterial in einem begrenzten Bereich abgelagert. Durch selektives Einbringen eines Bindermaterials wird die Partikelmaterialschicht in einem ausgewählten Bereich gebunden und mit der zuletzt vorher gefertigten Schicht verbunden. Dieser Vorgang wird in einer ausgewählten Anzahl von Malen wiederholt. Schließlich wird Partikelmaterial entfernt, das nicht durch Bindermaterial benetzt wurde, und infolgedessen ungebunden ist. Als Partikelmaterial wird beispielsweise pulverförmiger Quarzsand, als Bindermaterial Kunstharz verwendet. Der Binder wird durch Zuführen von Strahlung, Gas oder durch schlichte chemische Reaktion zum Aushärten gebracht.

Bei dem beschriebenen Verfahren ist es erforderlich, daß das aufgetragene Bindermaterial sowohl an die Berührungsstellen zwischen den benachbarten Partikeln der zuletzt aufgetragenen Schicht von Partikelmaterial als auch an die Berührungsstellen zwischen Partikeln der zuletzt aufgetragenen Schicht und Partikeln der vorletzten aufgetragenen Schicht gebracht wird. Nur so wird erreicht, daß die zuletzt aufgetragene Schicht die gewünschte ausgehärtete Gestalt erhält und mit der vorletzten aufgetragenen Partikelmaterialschicht verbunden wird.

Um auf diese Weise eine ausreichend feste Verbindung zwischen den einzelnen Partikeln und damit eine ausreichende Bauteilfestigkeit sicherzustellen, muß eine relativ große Menge Bindermaterial zugeführt werden. Das zugeführte Bindermaterial fließt nämlich zu einem großen Anteil in die Hohlräume zwischen den Körnern des Partikelmaterials, anstatt an die Berührungsstellen zwischen benachbarten Körnern des Partikelmaterials, an denen es seine Bindewirkung entfalten soll. Dadurch wird der Struktur eine sehr große Bindermaterialmenge zugeführt, die einen hohen Anteil an dem Material des fertigen Bauteils ausmacht. Dieser Anteil ist etwa doppelt so hoch wie z.B. bei Formen oder Kernen, die nach anderen herkömmlichen Modellbautechniken gefertigt werden.

Ein hoher Anteil an Bindermaterial im fertigen Bauteil hat jedoch erhebliche Nachteile zur Folge. Wird das Bauteil für Gießereianwendungen zum Beispiel als Form oder Kern verwendet, vergast das Bindermaterial während des Abgießvorgangs beinahe vollständig. Das Bindermaterial diffundiert somit zum Großteil in das hartwerdende Gußmetall und bildet Einschlüsse, sogenannte Lunker, die das erstellte Bauteil oder Modell an dieser Stelle verunreinigen und dabei möglicherweise auch schwächen.

Außerdem bedingt das Auftragen von Bindermaterial, wie z.B. Kunstharz, aufgrund der hohen Viskosität und niedrigen Oberflächenspannung des Bindermaterials sehr hohe Anforderungen an die Dosiersysteme. Insbesondere solche Kunstharze, die für das Abgießen von Metall günstige Eigenschaften im Hinblick auf Lunker aufweisen, sind mittels Mikrodosiersystemen nur unter äußerst hohem Aufwand, nur bei eingeschränkter Zuverlässigkeit bzw. Qualität oder gar nicht zu dosieren.

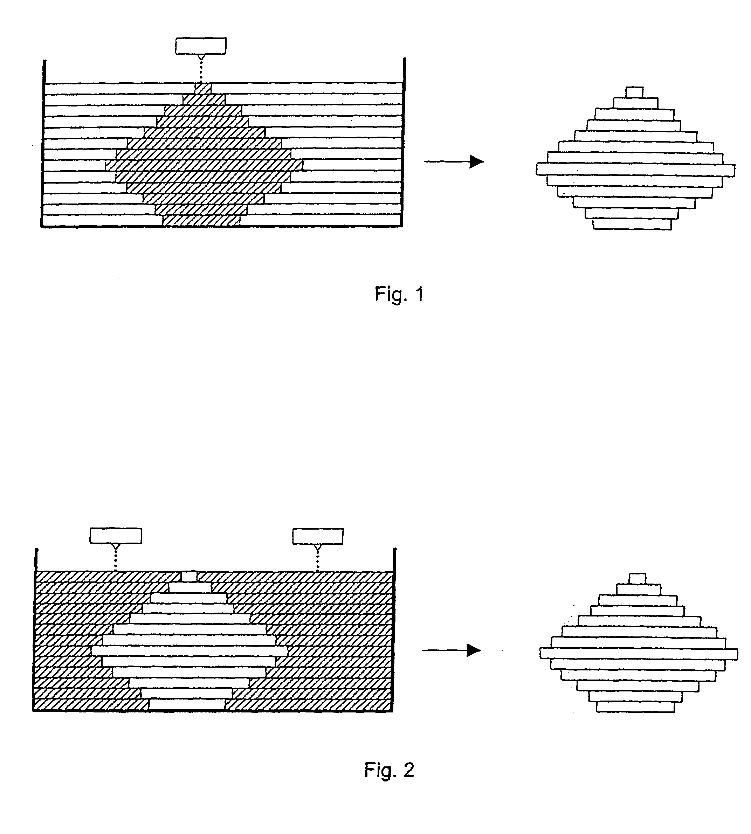

Aus der US 5 182 170 A ist ein Verfahren zum Herstellen eines Körpers bekannt, bei dem zum Verfestigen eines Teilbereichs des Körpers der Körper global (ganzräumig) einer Gasatmosphäre ausgesetzt wird und selektiv nur in die Teilbereiche Energie eingebracht wird (Fig. 2; Anspruch 1, letzter Absatz). Die Selektivität der Aushärtung wird hierbei durch die örtliche Selektivität der Energiezufuhr erreicht.

Der Erfindung liegt die Aufgabe zugrunde, ein einfaches und kostengünstiges Rapid-Prototyping Verfahren zur Herstellung von Bauteilen zu schaffen, bei dem gegenüber dem nach EP-0 431 924 B1 beschriebenen Verfahren ein erheblich verminderter Anteil von Bindemitteln in dem fertigen Bauteil erhalten wird und auch solche Bindemittel verwendbar sind, die eine geringe Neigung zur Lunkerbildung beim Abgießen herbeiführen.

Die Aufgabe wird durch ein Verfahren zum Herstellen von Bauteilen mit den Merkmalen nach Anspruch 1 gelöst.

Das erfindungsgemäße Verfahren zum Herstellen von Bauteilen, insbesondere von Formen oder Kernen, erfolgt in Auftragstechnik. Zunächst wird eine Schicht eines schüttfähigen, mit einem Bindermaterial umhüllte Partikel aufweisenden Verbundmaterials in einem Bereich mit einer den Abmessungen eines zu erzeugenden Bauteils angepaßten Breite und Länge abgelagert. Anschließend wird auf die Verbundmaterialschicht in einem selektiven Teilbereich des Bereichs ein Moderiermittel aufgebracht. Mit dem Moderiermittel wird die spezifische Energie, die erforderlich ist, damit das Verbundmaterial durch Anschmelzen oder chemisch Reagieren des Bindermaterials verfestigt wird, von einem Ausgangswert auf einen diskreten anderen Wert herauf- oder, vorzugsweise, herabgesetzt. Anschließend wird Energie mit einem Wert spezifischer Energie eingebracht, der zwischen dem Ausgangswert und dem anderen Wert liegt. Das Einbringen der Energie führt zum Verfestigen des selektiven Teilbereichs bzw. des von Moderiermittel freien Teilbereichs des Bereichs. Die Schritte des Ablagerns der Schicht, des Aufbringens des Moderiermittels und des Einbringens der Energie werden eine Anzahl von Malen wiederholt. Dabei wird gegebenenfalls bei jeder Wiederholung ein anderer selektiver Teilbereich ausgewählt. Schließlich wird das verfestigte Verbundmaterial von nicht verfestigtem Verbundmaterial getrennt.

Dadurch, daß als Werkstoff für das Bauteil ein schüttfähiges Verbundmaterial verwendet wird, bei dem Partikel mit einer Schicht von Bindermaterial umhüllt sind, ist gewährleistet, daß überall an den Stellen, an denen sich einander benachbarte Körner des Materials berühren, Bindermaterial vorhanden ist, und zwar bereits unmittelbar, sobald das Material aufgetragen ist. Es ist daher kein fluidmechanischen Gesetzmäßigkeiten, z.B. Oberflächenspannungseffekten, unterworfenes Aufbringen des Bindermaterials erforderlich, bei dem eine große Menge Bindermaterial an ungewünschte Stellen gebracht wird. Es besteht also nicht die Gefahr, daß Hohlräume zwischen den Partikeln in erheblichem Maße oder vollständig mit Bindermaterial aufgefüllt werden und der Anteil des Bindermaterials im fertigen Werkstück dadurch erhöht wird. Vielmehr ist der Anteil von Bindermaterial im fertigen Werkstück durch die ursprüngliche Zusammensetzung des Verbundmaterials vorgegeben, da das Bindermaterial als Bestandteil des Verbundmaterials in Form einer von vorneherein vorhandenen dünnen die Partikel umhüllenden Schicht eingebracht wird.

Durch den selektiven Auftrag des Moderiermittels und anschließende Energiezufuhr sowie die Wiederholung der Schritte a) bis c) wird das gewünschte Modell, insbesondere eine Form oder ein Kern für den Metallguß, durch schichtenweisen Aufbau in Auftragstechnik hergestellt. Durch eine direkte Ansteuerung durch Umsetzung von CAD-Daten lassen sich dabei komplexe Gestaltungen, insbesondere mit Hinterschneidungen, schnell und vollautomatisch sowie mit einer hohen Fertigungsgenauigkeit herstellen.

Je nachdem, ob die spezifische Energie, die erforderlich ist, damit das Verbundmaterial durch Anschmelzen oder chemisch Reagieren des Bindermaterials verfestigt wird, von einem Ausgangswert auf einen diskreten anderen Wert herab- oder heraufgesetzt wird, wird die Schicht in dem Teilbereich des Bereichs gebunden, in dem das Moderiermittel aufgebracht wird oder in dem Teilbereich des Bereichs gebunden, in dem das Moderiermittel gerade nicht aufgebracht wird. Dementsprechend entsteht das gewünschte Bauteil entweder in dem Teilbereich, in dem das Moderiermittel aufgetragen wird oder in dem übrigen Teilbereich des Bereichs.

Als Moderiermittel im Sinne dieser Erfindung werden Substanzen verstanden, die geeignet sind, die für die Verfestigung des Verbundmaterials erforderliche Energiezufuhr pro Volumeneinheit lokal zu modifizieren.

Dadurch daß ein derartiges Moderiermittelverwendet wird, wird die selektive Aushärtung durch relativ wenig aufwendige und kostengünstige Techniken verwirklicht, nämlich durch selektives Auftragen einer Substanz und globales Zuführen von Energie einer bestimmten Menge.

Erfindungsgemäß kann das Verbundmaterial Partikel aus Metall, Kunststoff, Keramik, Mineralien oder ähnlichen Materialien sowie ein Bindermaterial aus Kunststoff, Metall oder ähnlichen Substanzen aufweisen. Bevorzugt wird als Verbundmaterial jedoch Croning-Sand abgelagert, insbesondere Croning-Sand mit einem Phenol-Formaldehydharz, z.B Novolak oder Resol, als Bindermaterial. Croning-Sand ist kostengünstig und weist ein besonders geeignetes Anteilsverhältnis zwischen Partikeln und Bindermaterial auf. Insbesondere bei der Herstellung von Formen und Kernen für den Metallguß wird eine Verfahren unter Verwendung von Croning-Sand bevorzugt.

Erfindungsgemäß kann die Schicht von Verbundmaterial in einer Dicke abgelagert werden, die einer einzigen Teilchenstärke entspricht oder die bis zu mehreren Zentimetern beträgt. Bevorzugt wird die Schicht von Verbundmaterial jedoch in einer Dicke zwischen 0,1 und 2 mm abgelagert. Durch die Wahl einer solchen Schichtdicke wird die erreichbare Aufbaugeschwindigkeit maximiert, insbesondere, wenn flüssiges Moderiermittel verwendet wird. Bei größeren Schichtdicken führt die bis zum Durchdringen des Moderiermittels durch die gesamte Schicht abzuwartende Zeit zur Verlängerung der gesamten Aufbauzeit, bei kleineren Schichtdicken zu einer größeren Anzahl von zu fertigenden Schichten.

Grundsätzlich verkürzt sich bei größeren Schichtdicken die Aufbauzeit. Gleichzeitig verschlechtert sich die Bauteilauflösung.

Bevorzugt wird die Schichtstärke abhängig von der Komplexität der zu erstellenden Schichten und/oder dem Ausmaß der Veränderungen von Schicht zu Schicht variiert. Wenn z.B. die auszuhärtende Gestalt mehrerer aufeinanderfolgender Schichten identisch ist, wird durch Vergrößern der Schichtdicke ohne Einbußen in der Genauigkeit die Aufbauzeit vermindert.

Bevorzugt wird als Moderiermittel eine leicht zu dosierende Flüssigkeit aufgetragen.

Erfindungsgemäß kann als Moderiermittel eine Substanz aufgetragen werden, die einen geeigneten physikalischen, chemischen oder biologischen Effekt bewirkt, der zu einer Modifizierung der für die Verfestigung des Verbundmaterials erforderlichen Energiezufuhr pro Volumeneinheit führt. Bevorzugt wird als Moderiermittel ein bei dem Verfestigungsvorgang als Hemmstoff oder, insbesondere als Katalysator, wirkendes Material aufgetragen.

Erfindungsgemäß ist es möglich, daß die Energie eingebracht wird, ohne daß bei dem aufgebrachten Moderiermittel ein Phasenwechsel herbeigeführt wird. Bevorzugt wird die Energie eingebracht und mit dem Moderiermittel unter Schmelzen oder Verdampfen lokal einen Teil der eingebrachten Energie entzogen.

Erfindungsgemäß ist es möglich, daß die Energie eingebracht wird, ohne daß bei dem aufgebrachten Moderiermittel eine chemische Reaktion herbeigeführt wird. Bevorzugt wird die Energie eingebracht und mit dem Moderiermittel unter Ablauf einer chemischen Reaktion lokal einen Teil der eingebrachten Energie entzogen oder solche freigesetzt.

Erfindungsgemäß kann als Moderiermittel ein Pulver oder ein Gemisch aus Flüssigkeit und Festkörperpartikeln, z.B. eine Suspension, aufgetragen werden. Bevorzugt wird jedoch als Moderiermittel eine Flüssigkeit aufgetragen. Weiter bevorzugt wird als Moderiermittel ein Alkohol oder, insbesondere, eine Säure, weiter insbesondere eine Salzsäure, aufgetragen. Die Verwendung dieser Flüssigkeiten führt zu besonders festen Verbindungen, insbesondere wenn als Verbundmaterial Croning-Sand eingesetzt wird.

Erfindungsgemäß kann das Moderiermittel mit einer Art Pinsel aufgetragen werden, mit einer Rolle aufgewalzt werden, mit einem Schieber aufgezogen werden, in Plattenform aufgelegt werden oder mit einem Sprühgerät aufgespritzt werden. Bevorzugt wird das Moderiermittel jedoch in Form von Tröpfchen aufgedruckt. Dabei können herkömmliche Tintendrucksysteme Verwendung finden, die z.B. mit Piezo-Technik, Bubble-Jet Technik oder Continuous-Jet-Technik arbeiten. Bevorzugt wird ein Piezo-Druckverfahren angewendet.

Erfindungsgemäß kann das Verfahren zur Herstellung üblicher Bauteile verwendet werden, z.B. von Design- oder Konstruktionsmodellen. Bevorzugt wird das Verfahren zur Herstellung einer Gießform oder eines Gießkerns verwendet.

Bevorzugte Ausführungsformen der Erfindung werden in Verbindung mit der Zeichnung beschrieben. In der Zeichnung zeigt:
Figur 1 das Prinzip einer Ausführungsform des erfindungsgemäßen Verfahrens, bei dem das Moderiermittel in demjenigen Teilbereich des Ablagerungsbereichs der Schichten aufgetragen wird, in dem das Partikelmaterial gebunden wird und damit das Bauteil entsteht; und
Figur 2 das Prinzip einer Ausführungsform des erfindungsgemäßen Verfahrens, bei dem das Moderiermittel in demjenigen Teilbereich des Ablagerungsbereichs der Schichten aufgetragen wird, in dem das Partikelmaterial gerade nicht gebunden wird.

Aus Figur 1 ist das Prinzip einer Ausführungsform des erfindungsgemäßen Verfahrens ersichtlich. Dabei ist in der linken Darstellung der Aufbau des bei der Durchführung des Verfahrens hergestellten Schichtenaufbaus vor Entfernen des ungebundenen Partikelmaterials dargestellt. In der rechten Darstellung ist die Gestalt des entstandenen Bauteils nach Entfernen des ungebundenen Partikelmaterials dargestellt.

Bei der dargestellten Ausführungsform des erfindungsgemäßen Verfahrens wird das Moderiermittel in demjenigen Teilbereich des Ablagerungsbereichs der Schichten aufgetragen, in dem das Partikelmaterial gebunden wird und damit das Bauteil entsteht

In dem linken Teil der Figur ist in einem durch Wände eines Behälters abgegrenzten Bereich schichtenweise Material abgelagert. Die einzelnen Schichten sind durch waagerechte zwischen den Schichten angeordnete Trennlinien dargestellt. In den schraffiert gezeichneten Teilbereichen der einzelnen Schichten ist das Moderiermittel aufgetragen worden. Bei dem aufgetragenen Moderiermittel handelt es sich um ein Moderiermittel, mit dem die spezifische Energie, die erforderlich ist, damit das Verbundmaterial durch Anschmelzen oder chemisch Reagieren des Bindermaterials verfestigt wird, von einem Ausgangswert auf einen diskreten anderen Wert herabgesetzt wird. Durch das Einbringen von Energie mit einem Wert spezifischer Energie, der zwischen dem Ausgangswert und dem anderen Wert liegt, sind daher die Teilbereiche verfestigt worden, in denen das Moderiermittel aufgetragen worden ist.

Aus Figur 2 ist das Prinzip einer anderen Ausführungsform des erfindungsgemäßen Verfahrens ersichtlich. Auch in Figur 2 ist in der linken Darstellung der Aufbau des bei der Durchführung des Verfahrens hergestellten Schichtenaufbaus vor Entfernen des ungebundenen Partikelmaterials dargestellt und in der rechten Darstellung die Gestalt des entstandenen Bauteils nach Entfernen des ungebundenen Partikelmaterials dargestellt.

Bei der in Figur 2 dargestellten Ausführungsform des erfindungsgemäßen Verfahrens wird das Moderiermittel in demjenigen Teilbereich des Ablagerungsbereichs der Schichten aufgetragen, in dem das Partikelmaterial nicht gebunden wird, der also das Bauteil umgibt bzw. die Negativform des Bauteils darstellt.

In dem linken Teil der Figur 2 ist wie in Figur 1 in einem durch Wände eines Behälters abgegrenzten Bereich schichtenweise Material aufgetragen. Die einzelnen Schichten sind durch waagerechte zwischen den Schichten angeordnete Trennlinien dargestellt. In den schraffiert gezeichneten Teilbereichen der einzelnen Schichten ist das Moderiermittel aufgetragen worden. Bei dem aufgetragenen Moderiermittel handelt es sich um ein Moderiermittel, mit dem die spezifische Energie, die erforderlich ist, damit das Verbundmaterial durch Anschmelzen oder chemisch Reagieren des Bindermaterials verfestigt wird, von einem Ausgangswert auf einen diskreten anderen Wert heraufgesetzt wird. Durch das Einbringen von Energie mit einem Wert spezifischer Energie, der zwischen dem Ausgangswert und dem anderen Wert liegt, sind daher die Teilbereiche verfestigt worden, in denen kein Moderiermittel aufgetragen worden ist.

## Patentansprüche

1. Verfahren zum Herstellen von Bauteilen, insbesondere von Formen oder Kernen, durch Auftragstechnik mit den Schritten:
a) Ablagern einer Schicht eines schüttfähigen, mit einem Bindermaterial umhüllte Partikel aufweisenden Partikel-Verbundmaterials in einem Bereich mit einer den Abmessungen des zu erzeugenden Bauteils angepaßten Breite und Länge;
b) selektives Auftragen eines flüssigen oder pulverförmigen oder suspensionsförmigen Moderiermittels auf die Verbundmaterialschicht in einem ausgewählten Teilbereich des Bereichs,
wobei mit dem Moderiermittel die spezifische Energie, die zum Verfestigen des Verbundmaterials durch Anschmelzen oder chemische Reaktion des Bindermaterials erforderlich ist, von einem Ausgangswert auf einen diskreten anderen Wert herabgesetzt oder heraufgesetzt wird;
c) globales Einbringen von Energie mit einem Wert spezifischer Energie, der zwischen dem Ausgangswert und dem anderen Wert liegt, in die Verbundmaterialschicht, so daß der selektive Teilbereich verfestigt wird, falls die spezifische Energie in Schritt b) herabgesetzt wurde, bzw. der von Moderiermittel freie Teilbereich des Bereichs verfestigt wird, falls die spezifische Energie in Schritt b) heraufgesetzt wurde;
d) Wiederholen der Schritte a) bis c), wobei gegebenenfalls ein anderer selektiver Teilbereich ausgewählt wird; und
e) Trennen des verfestigten Verbundmaterials von nicht verfestigtem Verbundmaterial.

2. Verfahren nach Anspruch 1, wobei als Verbundmaterial Croning-Sand abgelagert wird.

3. Verfahren nach Anspruch 1 oder 2, wobei die Schicht von Verbundmaterial in einer Dicke von 0,1 bis 2 mm abgelagert wird.

4. Verfahren nach einem der Ansprüche 1 bis 3, wobei die Schichtdicke abhängig von der Komplexität der zu erstellenden Schichten und/oder dem Ausmaß der Veränderungen von Schicht zu Schicht variiert wird.

5. Verfahren nach einem der Ansprüche 1 bis 4, wobei als Moderiermittel ein bei dem Verfestigungsvorgang als Hemmstoff oder, insbesondere als Katalysator, wirkendes Material aufgetragen wird.

6. Verfahren nach einem der Ansprüche 1 bis 5, wobei mit dem Moderiermittel unter Schmelzen oder Verdampfen lokal ein Teil der eingebrachten Energie entzogen wird.

7. Verfahren nach einem der Ansprüche 1 bis 6, wobei mit dem Moderiermittel unter Ablauf einer chemischen Reaktion lokal Energie freigesetzt oder entzogen wird.

8. Verfahren nach einem der Ansprüche 1 bis 7, wobei als Moderiermittel eine Flüssigkeit, insbesondere ein Alkohol oder eine Säure, weiter insbesondere eine Salzsäure, aufgetragen wird.

9. Verfahren nach einem der Ansprüche 1 bis 8, wobei die Energie mittels Wärmestrahlung eingebracht wird.

10. Verfahren nach einem der Ansprüche 1 bis 9, wobei das Moderiermittel in einem Tintendruckverfahren, insbesondere in einem Tintendruckverfahren der Piezo-Technik, aufgedruckt wird.

11. Verwendung des Verfahrens nach einem der Ansprüche 1 bis 10 zur Herstellung einer Gießform oder eines Gießkerns.

## Claims

1. A method for manufacturing parts, especially molds or cores, by an applying technique, comprising the steps of:
a) depositing a layer of a pourable particle composite material having particles coated by a binder material, in an area of a length and width adapted to the dimensions of the part to be produced;
b) selectively applying a liquid or powdery or suspension-like moderating agent onto the composite material layer in a selected sub-area of the area,
wherein by means of the moderating agent the specific energy required for solidification of the composite material by melting or chemical reaction of the binder material is being decreased or increased from a start value to a discrete other value;
c) globally introducing energy with a value of specific energy between the start value and the other value into the composite material layer so that the selective sub-area is solidified in case that the specific energy was decreased in step b), or that the area's sub-area which is free of moderating agent is solidified in case that the specific energy was increased in step b), respectively;
d) repeating the steps a) to c), wherein, if necessary, another selective sub-area is selected; and
e) separating of solidified composite material from non-solidified composite material.

2. The method as set forth in claim 1 wherein Croning Sand is deposited as composite material.

3. The method as set forth in claim 1 or 2, wherein the layer of the composite material is being deposited with a thickness from 0.1 to 2 millimeters.

4. The method as set forth in one of the claims 1 to 3, wherein the thickness of the layer is being varied, in dependence on the complexity of the layers to be built and/or the amount of changes from layer to layer.

5. The method as set forth in one of the claims 1 to 4, wherein a material is applied as a moderating agent which acts as an inhibitor or, particularly, as a catalyst in the solidification process.

6. The method as set forth in one of the claims 1 to 5, wherein a fraction of the introduced energy is being removed locally by melting or evaporating the moderating agent.

7. The method as set forth in one of the claims 1 to 6, wherein energy is being released or removed locally by a chemical reaction of the moderating agent.

8. The method as set forth in one of the claims 1 to 7, wherein a liquid, particularly an alcohol or an acid, further particularly a hydrochloric acid, is applied as moderating agent.

9. The method as set forth in one of the claims 1 to 8, wherein the energy is introduced by heat radiation.

10. The method as set forth in one of the claims 1 to 9,
wherein the moderating agent is printed by means of an ink-jet printing process, particularly an ink-jet printing process using piezo-technique.

11. Using the method as set forth in one of the claims 1 to 10 for manufacturing a casting mold or a casting core.

## Revendications

1. procédé de fabrication de pièces, en particulier de moules ou de noyaux, par une technique d'application de couches, comprenant les étapes suivantes :
a) dépôt d'unc couche d'un matériau composite particulaire meuble présentant des particules enrobées d'un matériau liant dans une zone ayant une largeur et une longueur ajustées sur les dimensions de la pièce à produire;
b) application sélective d'un agent de modération liquide ou pulvérulent ou formant suspension sur la couche de matériau composite dans une zone partielle sélectionnée de la zone, opération dans laquelle l'agent de modération permet de réduire ou d'augmenter l'énergie spécifique, qui est nécessaire pour consolider le matériau composite par fusion ou réaction chimique du matériau liant, d'une valeur initiale à une autre valeur discrète;
c) apport global d'énergie avec une valeur d'énergie spécifique, qui se situe entre la valeur initiale et l'autre valeur, dans la couche de matériau composite de sorte que la zone partielle sélective soit consolidée au cas où l'énergie spécifique de l'étape b) a été réduite ou que la zone partielle libre de la zone soit consolidée par l'agent de modération au cas où l'énergie spécifique a été augmentée à l'étape b);
d) répétition des étapes a) à c) en sélcctionnant éventuellement une autre zone partielle sélective; et
e) séparation du matériau composite consolidé du matériau composite non consolidé.

2. Procédé selon la revendication 1, dans lequel on dépose comme matériau composite du sable de Croning.

3. Procédé selon la revendication 1 ou 2, dans lequel la couche de matériau composite est déposée en épaisseur de 0,1 à 2 mm.

4. Procédé selon l'une quelconque des revendications 1 à 3, dans lequel l'épaisseur des couches est modifiée en fonction de la complexité des couches à appliquer et/ou du degré des variations d'une couche à l'autre.

5. Procédé selon l'une quelconque des revendications 1 à 4, dans lequel on applique comme agent de modération un matériau opérant dans l'opération de consolidation comme inhibiteur ou, en particulier, comme catalyseur.

6. Procédé selon l'une quelconque des revendications 1 à 5, dans lequel une partie de l'énergie d'apport est éliminée localement avec l'agent de modération par fusion ou vaporisation.

7. Procédé selon l'une quelconque des revendications 1 à 6, dans lequel de l'énergie est libérée ou éliminée localement avec l'agent de modération par déroulement d'une réaction chimique.

8. Procédé selon l'une quelconque des revendications 1 à 7, dans lequel on applique comme agent de modération un liquide, en particulier un alcool ou un acide, en particulier un acide chlorhydrique.

9. Procédé selon l'une quelconque des revendications 1 à 8, dans lequel l'énergie est appliquée au moyen d'un rayonnement thermique.

10. Procédé selon l'une quelconque des revendications 1 à 9, dans lequel l'agent de modération est appliqué par un procédé d'impression d'encres, en particulier dans un procédé d'impression d'encres par une technique piézoélectrique.

11. Utilisation du procédé selon l'une quelconque des revendications 1 à 10 pour la fabrication d'un moule de coulée ou d'un noyau de coulée.
